# EUROPEAN PATENT APPLICATION

(11) **EP 1 933 313 A1**
(43) Date of publication of application: **18.06.2008**
(21) Application number: 06301252.0
(22) Date of filing: 14.12.2006
(51) Int. Cl.: G11B 7/007, G11B 7/135, G11B 7/0045, G11B 7/005, G11B 7/125

(54) **Compatible optical recording medium**

(71) Applicant: Thomson Licensing, 92100 Boulogne-Billancourt (FR)
(72) Inventor: Knittel, Joachim, 78532 Tuttlingen (DE); Richter, Hartmut, 78052 Villingen-Schwenningen (DE); Hamersley, Alan Bruce, Newbury Park, CA 91320 (US)
(74) Representative: Schmidt-Uhlig, Thomas

(57) **Abstract**

The optical recording medium has a recording layer (2) sensitive for recording at a first wavelength and sensitive for reading at a second wavelength, the recording layer (2) having a groove structure (4), wherein at the first wavelength the groove structure (4) has a diffraction efficiency into a first diffraction order sufficiently large to generate a push-pull signal, and at the second wavelength it has a diffraction efficiency into a first diffraction order close to zero.
The optical pickup has a light source for generating a light beam (6) at a first wavelength and a numerical aperture given by the second numerical aperture multiplied with the ratio of the first wavelength and the second wavelength.

## Description

The present invention relates to a format of a recordable optical recording medium, which is designed in such a way that it can be read by any standard player and recorder, and to an optical pickup unit suitable for writing data onto the recordable optical recording medium.

The distribution of digital data such as movies or software on optical recording media today is established as the main distribution channel. However, this means that stores need to stock a large amount of titles in order to be able to provide most requested titles immediately to their customers without having to order them.

In order to reduce this need for a large stock several solutions for a manufacturing on demand or a distribution via networks have been proposed. The optical recording medium, typically a DVD (digital versatile disk), is recorded as soon as a title is requested by a customer. Recording is done with a special recorder provided in a store, with a kiosk type recording terminal, or by a special consumer recorder connected to a network. These special recorders allow to write data to a recordable DVD in such a way that the DVD has the appearance of a CSS-encrypted DVD-Video (ROM) disk, even though it is a specially finalized recordable DVD. For recording the optical recording medium has a groove structure to guide an optical pickup unit relative to the optical recording medium.

In order to establish the above described solutions as further distribution channels, the recorded optical recording media have to be compatible with as many standard players and recorders as possible. While this is usually not a problem for players, the situation is different with recorders. As a copy protection mechanism some optical pickups used in recorders do not allow to retrieve data from an optical recording medium indicated as a read-only medium when a push-pull signal originating from the groove structure is found, which is an indication of a recordable optical recording medium. Such incompatibilities have to be avoided.

It is an object of the invention to propose a format for a recordable optical recording medium, which has the appearance of a read-only optical recording medium for most players and recorders.

According to the invention, this object is achieved by an optical recording medium with a recording layer sensitive for recording at a first wavelength and sensitive for reading at a second wavelength, the recording layer having a groove structure, wherein at the first wavelength the groove structure has a diffraction efficiency into a first diffraction order sufficiently large to generate a push-pull signal, and at the second wavelength it has a diffraction efficiency into a first diffraction order close to zero.

The invention proposes a format of an optical recording medium, which is recorded with a laser system of a first wavelength, e.g. 405nm, and intended to be written at a second wavelength, e.g. 650nm. The material of the recording layer of the optical recording medium is sensitive to the first wavelength for recording. It is at the same time chosen such that the recorded data can be read by the second wavelength. The optical recording medium is designed in such a way that it can be read by any standard player or recorder. For this purpose the push-pull signal generated by the optical recording medium has the following properties:
- At the first wavelength the push-pull signal is strong, as it is necessary for tracking.
- At the second wavelength the push-pull signal is nearly zero to avoid incompatibilities with recorder pickups. Tracking is done with DPD (differential phase detection) or another tracking method that does not require a groove structure. The difference between the first wavelength and the second wavelength preferably is at least 50nm in order to enable the transition from a large diffraction efficiency at the first wavelength to the nearly zero diffraction efficiency at the second wavelength. The format according to the invention has the advantage that the recorded media are similar to read-only media and compatible with most players and recorders.

When a wavelength of 405nm is used for recording and a wavelength of 650nm is used for reading, the groove structure preferably has a groove width of less then 120nm and a groove depth of around 40nm. At 405nm such a groove structure has a diffraction efficiency into a first diffraction order sufficiently large to generate a push-pull signal, whereas at 650nm the diffraction efficiency into the first diffraction order is close to zero

Advantageously, an optical pickup for a recording device for recording on an optical recording medium intended to be read with a second wavelength and a second numerical aperture, with a light source for generating a light beam at a first wavelength, has a numerical aperture given by the second numerical aperture multiplied with the ratio of the first wavelength and the second wavelength.
In this way the laser spot size on the optical recording medium has essentially the same size as the laser spot of a pickup for reading the optical recording medium at the second wavelength with the second numerical aperture. For example, with a recording wavelength of 405nm, a reading wavelength of 650nm and a reading numerical aperture of 0.6 the recording numerical aperture is given by 0.6×405nm/605nm=0.374. Due to the low NA the optical pickup can be manufactured very easily, as a small NA allows for large mechanical tolerances of the optics. Alternatively, the laser spot size is adapted by decreasing the beam quality factor M² or by operating out of focus.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: illustrates the structure of an optical recording medium according to the invention,
- Fig. 2: shows the result of a simulation of the diffraction efficiency of an optical recording medium according to the invention at a wavelength of 650nm, and
- Fig. 3: shows the result of a simulation of the diffraction efficiency of the optical recording medium at a wavelength of 405nm.

In the following the invention is explained with reference to a DVD-like optical recording medium, which is read with a wavelength around 650nm. Of course, the general idea of the invention is also applicable to other types of optical recording media.

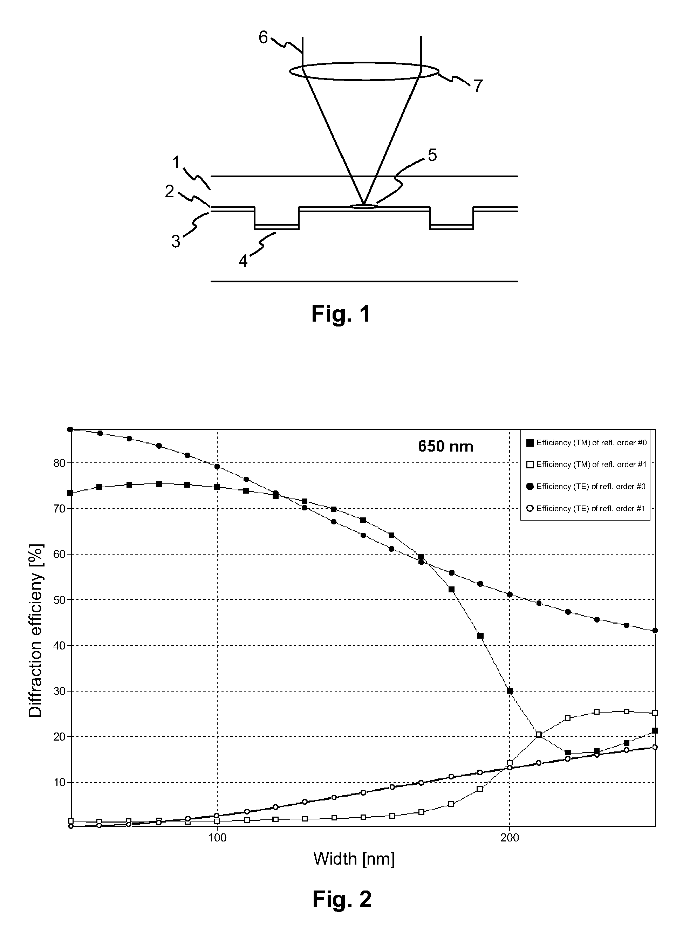

The structure of an optical recording medium according to the invention is shown schematically in Fig. 1. A polycarbonate cover-layer 1 protects a recording layer 2. The recording layer 2 consists of a dye, an inorganic material or a phase change material that is sensitive for recording at a wavelength around 405nm, and that allows read-out at a wavelength around 650nm. An example of such a material is AgSb, as disclosed in Fang et al.: "Optical properties of inorganic AgSb recording thin film", Appl. Phys. Lett. 88, 261917 (2006). The reflectivity of this material varies only slightly from 400nm to 800nm. Situated below the recording layer 2 is a reflective aluminum layer 3 with a groove structure 4. Recorded marks 5, which are generated by a laser beam 6 at 405nm focused by an objective lens 7 are located between the grooves 4. The grooves 4 have a particularly small width for a DVD, e.g. 100nm, and a small depth, e.g. 40nm. This ensures that a push-pull signal obtained by an optical pickup is strong at 405nm and weak at 650nm.

For recording on the optical recording medium an optical pickup unit operating with a wavelength of 405nm is used. The optical pickup unit is designed with a numerical aperture of NA=0.374. This means that the laser spot size on the optical recording medium is similar to the laser spot size of a standard DVD recorder with a wavelength of 605nm and a numerical aperture of NA=0.6, as 0.374=0.6×405nm/605nm. Due to the low NA the special optical pickup unit can be manufactured very easily, as a small NA allows for large mechanical tolerances of the optics.

Fig. 2 shows the result of a simulation of the diffraction efficiency of an optical recording medium according to the invention at a wavelength of 650nm. The simulation is based on the assumption of plane waves at normal incidence, which are either TE or TM polarized. The optical recording medium has a track pitch of 740nm and a groove depth of 40nm. The optical recording medium is similar to the one shown in Fig. 1 except that there is no recording layer 2. The push-pull signal strength depends mainly on the strength of the radiation diffracted into the 1st and the -1st diffraction order, assuming that the 0th order is stronger than the 1st order. The simulation shows that for a groove width of 100nm the diffraction efficiency into the 1st order at 650nm is below 2% for both TE and TM. This means the push-pull signal is very small.

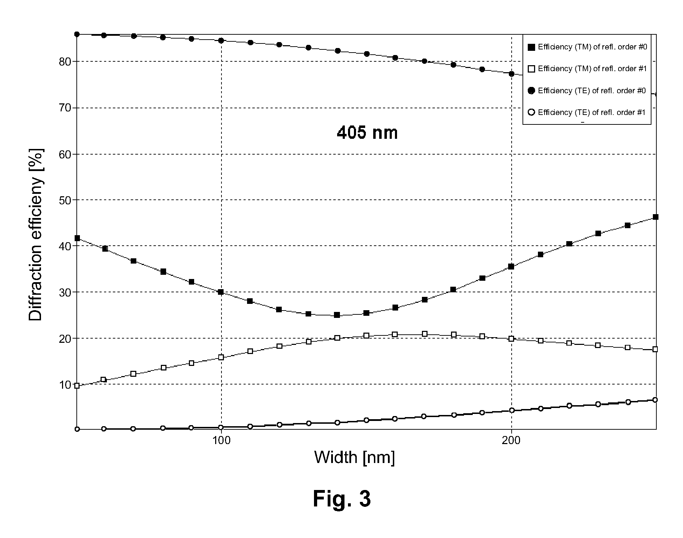

Fig. 3 shows the result of a simulation of the diffraction efficiency of the optical recording medium at a wavelength of 405nm. The simulation is based on the same assumptions as the simulation of Fig. 2. As can be seen, contrary to the results at 650nm the diffraction efficiency into the 1st order at 405nm is 16% for TM, which means that the push-pull signal is strong. The signal strength of the push-pall signal can be further enhanced by using a polarization filter in front of the detector used for generating the push-pull signal, which blocks the TE part of the light.

## Claims

1. Optical recording medium with a recording layer (2) having a groove structure (4), **characterized in that** the recording layer (2) is sensitive for recording at a first wavelength and sensitive for reading at a second wavelength, wherein at the first wavelength the groove structure (4) has a diffraction efficiency into a first diffraction order sufficiently large to generate a push-pull signal, and at the second wavelength it has a diffraction efficiency into a first diffraction order close to zero.

2. Optical recording medium according to claim 1, **wherein** the difference between the first wavelength and the second wavelength is around 50nm.

3. Optical recording medium according to claim 1 or 2, **wherein** the first wavelength is around 405nm and the second wavelength is around 650nm.

4. Optical recording medium according to one of claims 1 to 3, **wherein** the groove structure (4) has a groove width of less then 120nm and a groove depth of around 40nm.

5. Optical recording medium according to one of claims 1 to 4, **wherein** it is a DVD-like medium.

6. Optical pickup for recording on an optical recording medium intended to be read with a second wavelength and a second numerical aperture, **characterized in that** it has a light source for generating a light beam (6) at a first wavelength and a numerical aperture given by the second numerical aperture multiplied with the ratio of the first wavelength and the second wavelength.

7. Optical pickup according to claim 6, **wherein** the difference between the first wavelength and the second wavelength is around 50nm.

8. Optical pickup according to claim 6 or 7, **wherein** the first wavelength is around 405nm, the second wavelength is around 650nm, and the numerical aperture is around 0.374.

9. Optical pickup according to one of claims 6 to 8, **further** having a polarization filter in front of a detector for generating a push-pull signal, which blocks a TE part of the light beam (6).

10. Recording device for recording on an optical recording medium intended to be read with a second wavelength, **characterized in that** it has an optical pickup according to one of claims 6 to 9.

11. Method for recording on an optical recording medium intended to be read with a second wavelength, **having** the steps of:
- generating a light beam (6) at a first wavelength, and
- recording on the optical recording medium with the light beam (6) at the first wavelength.
